# FASCICULE DE BREVET EUROPEEN

(11) **EP 1 496 413 B1**
(45) Date de publication et mention de la délivrance du brevet: **23.04.2008**
(21) Numéro de dépôt: 04291511.6
(22) Date de dépôt: 16.06.2004
(51) Int. Cl.: G05D 1/00, B64C 25/42

(54) **Système d'aide à la commande de la décélération d'un aéronef roulant sur le sol**
Hilfssystem zur Verzögerungssteuerung eines Flugzeuges im Rollvorgang
System for assisting in the control of aircraft deceleration during the rolling phase

(30) Priorité: 08.07.2003 FR 0308319
(43) Date de publication de la demande: 12.01.2005
(73) Titulaire: AIRBUS France, 31060 Toulouse (FR)
(72) Inventeur: Villaume, Fabrice, 31000 Toulouse (FR); Maas, Mikael, 31520 Ramonville Saint Agne (FR)
(74) Mandataire: Hauer, Bernard

(56) Documents cités:
- DE-A- 4 009 668
- DE-A- 4 304 562
- FR-A- 2 817 979
- US-A- 5 968 106
- "SYSTEM PREDICTS CRITICAL RUNWAY PERFORMANCE PARAMETERS" mars 1991 (1991-03), NTIS TECH NOTES, US DEPARTMENT OF COMMERCE. SPRINGFIELD, VA, US, PAGE(S) 292 , XP000227031 ISSN: 0889-8464 * le document en entier *

## Description

La présente invention concerne un système d'aide à la commande de la décélération d'un aéronef, en particulier d'un avion de transport, roulant sur le sol.

Généralement, un atterrissage d'un avion présente trois phases successives :
- une phase d'approche, au cours de laquelle l'aéronef s'approche de la piste d'atterrissage ;
- l'atterrissage proprement dit, avec l'impact de l'aéronef sur cette piste d'atterrissage ; et
- une phase de roulage, au cours de laquelle l'aéronef est freiné de manière à lui permettre de s'engager sur une bretelle de sortie de la piste d'atterrissage pour libérer cette dernière.

On sait qu'un tel freinage peut être réalisé à l'aide d'un système de freinage automatique, permettant de réduire la charge de travail du pilote et/ou de libérer au plus vite la piste d'atterrissage.

Par le document FR-2 817 979 de la demanderesse, on connaît un procédé et un dispositif de commande automatique de la décélération d'un aéronef en phase de roulage sur une piste d'atterrissage.

Selon ce document, au moment de l'impact, c'est-à-dire au moment de l'entrée en contact du train d'atterrissage avec la piste d'atterrissage, aucune consigne de décélération de la phase de roulage n'est appliquée à l'aéronef. Ce dernier parcourt ainsi une première portion de la piste d'atterrissage avec une vitesse élevée, au moins jusqu'à un instant ultérieur de modification de la consigne de décélération. A partir de cet instant, les moyens de freinage sont véritablement sollicités. En retardant ainsi l'instant de modification de la consigne de décélération, il est possible de parcourir une plus grande portion de la piste à plus vive allure et donc de réduire le temps d'occupation de la piste.

En outre, par le document US-5 968 106, on connaît un système de freinage automatique qui comporte :
- des moyens de freinage commandables permettant de freiner l'aéronef, lorsqu'il roule sur le sol;
- une unité de freinage qui commande automatiquement lesdits moyens de freinage, en fonction d'ordres de décélération reçus ; et
- une unité de calcul pour calculer, en utilisant des formules particulières, des ordres de décélération permettant d'arrêter l'aéronef à une position d'arrêt particulière sur la piste, notamment à la position d'une bretelle de sortie de la piste.

Ce système de freinage comporte, de plus, un élément d'interface permettant à un membre de l'équipage d'entrer dans ladite unité de calcul des données relatives à la piste d'atterrissage, à savoir essentiellement ladite position d'arrêt particulière.

On notera que cet élément d'interface n'est pas un véritable moyen de communication (à double sens) entre l'équipage et le système de freinage, puisqu'il permet uniquement d'entrer des données (un seul sens de circulation de l'information) dans ce dernier. L'équipage doit donc déterminer les données à entrer, telles que ladite position d'arrêt, qui sont nécessaires au fonctionnement dudit système de freinage, à l'aide d'autres sources d'informations, ce qui présente une charge de travail importante.

Par ailleurs, par le document DE-43 04 562, on connaît un système pour aider au guidage d'un aéronef sur un aéroport. Pour ce faire, ce document antérieur prévoit de déterminer la position de l'aéronef à l'aide d'un récepteur GPS. Cette position est ensuite indiquée sur une carte de l'aéroport, qui est affichée sur des moyens d'affichage installés dans le poste de pilotage de l'aéronef.

La présente invention a pour objet de remédier aux inconvénients précités. Elle concerne un système d'aide à la commande de la décélération d'un aéronef roulant sur le sol, qui permet :
- d'une part, d'obtenir un freinage particulièrement efficace permettant notamment à l'aéronef de sortir rapidement de la piste d'atterrissage; et
- d'autre part, de réduire la charge de travail du ou des pilotes de l'aéronef.

A cet effet, selon l'invention, ledit système du type comportant:
- des moyens de freinage commandables permettant de freiner l'aéronef, lorsqu'il roule sur le sol ;
- une unité de freinage qui commande automatiquement lesdits moyens de freinage, en fonction d'ordres de décélération reçus ;
- une unité de calcul pour calculer des ordres de décélération ; et
- un élément d'interface qui est à la disposition d'un opérateur et qui est relié à ladite unité de calcul,
est remarquable en ce que :
- ladite unité de calcul détermine une pluralité de couples de distance et de vitesse relatifs au roulage de l'aéronef sur une piste d'atterrissage utilisée pour l'atterrissage dudit aéronef et comprenant plusieurs sorties, chacun desdits couples de distance et de vitesse indiquant la vitesse de roulage de l'aéronef à la distance associée qui est définie par rapport au seuil de piste, en tenant compte du point d'impact de l'aéronef sur ladite piste d'atterrissage lors de l'atterrissage ;
- ledit élément d'interface comporte :
   - des moyens d'affichage permettant d'afficher sur un écran de visualisation une représentation de ladite piste d'atterrissage montrant lesdites sorties, ainsi que des indications illustrant lesdits couples de distance et de vitesse, permettant d'aider un opérateur à choisir l'une desdites sorties ; et
   - des moyens de sélection permettant à un opérateur de sélectionner la sortie choisie ;
- ladite unité de calcul détermine une vitesse finale correspondant à la vitesse de l'aéronef à la sortie qui a été sélectionnée par un opérateur et une distance finale correspondant à la distance entre ladite sortie sélectionnée et ledit seuil de piste de la piste d'atterrissage ;
- pendant la phase d'approche avant l'atterrissage, lesdits moyens d'affichage dudit élément d'interface affichent sur ledit écran de visualisation des indications illustrant ladite vitesse finale et ladite distance finale ; et
- après l'atterrissage lors du roulage sur la piste d'atterrissage, ladite unité de calcul utilise ladite vitesse finale et ladite distance finale pour calculer lesdits ordres de décélération.

Ainsi, grâce à l'invention, ledit système permet d'aider un opérateur, en particulier un pilote de l'aéronef, à sélectionner la sortie la plus appropriée, notamment celle qui est la plus adaptée aux caractéristiques de la piste et de l'aéronef, ce qui permet d'augmenter la précision de la sélection et de plus de réduire la charge de travail dudit opérateur, puisque les informations affichées par ledit système sont directement disponibles pour ledit opérateur.

De plus, le système conforme à l'invention comprend:
- non seulement une fonction de freinage automatique, après l'atterrissage ;
- mais également une fonction d'information du pilote, en particulier avant l'atterrissage, permettant notamment de bien préparer ledit atterrissage.

En outre, avantageusement, ladite unité de calcul détermine au moins les couples de distance et de vitesse suivants :
- une vitesse de roulage correspondant à une première vitesse prédéterminée, et la distance minimale du seuil de piste lorsque l'aéronef roule à cette première vitesse prédéterminée ;
- une vitesse de roulage correspondant à une seconde vitesse prédéterminée, et la distance minimale du seuil de piste lorsque l'aéronef roule à cette seconde vitesse prédéterminée, dans le cas où la piste d'atterrissage est sèche ; et
- une vitesse de roulage correspondant à la seconde vitesse prédéterminée, et la distance minimale du seuil de piste lorsque l'aéronef roule à cette seconde vitesse prédéterminée, dans le cas où la piste d'atterrissage est mouillée.

Par ailleurs, pour aider le pilote à choisir la sortie et pour faciliter la compréhension de la situation effective (sur la piste d'atterrissage) avant et surtout après l'atterrissage, de façon avantageuse, lesdits moyens d'affichage dudit élément d'interface mettent en évidence sur ladite représentation de la piste d'atterrissage toutes les sorties qui se trouvent à une distance dudit seuil de piste, qui est inférieure à la distance d'un couple de distance et de vitesse ayant comme vitesse une vitesse de roulage maximale prédéterminée de l'aéronef, par exemple la vitesse de roulage maximale pour emprunter la sortie.

De plus, avantageusement, pendant la phase d'approche, ladite unité de calcul détermine un niveau de décélération qui est affiché sur ledit écran de visualisation dudit élément d'interface.

Dans un mode de réalisation particulier, ladite unité de calcul détermine un ordre de décélération et l'envoie à l'unité de freinage pour freiner automatiquement l'aéronef, à un instant correspondant au premier des deux instants suivants :
- l'instant où l'aéronef se trouve complètement au sol sur la piste d'atterrissage, à l'atterrissage ; et
- l'instant de fin d'un délai de temporisation prédéterminé qui s'est écoulé depuis un premier contact de l'aéronef avec la piste d'atterrissage.

Par ailleurs, avantageusement, lors du roulage sur la piste d'atterrissage, l'unité de calcul détermine un premier couple de distance et de vitesse comprenant ladite vitesse finale et une première distance correspondant à la distance dudit seuil de piste à ladite vitesse finale, et lesdits moyens d'affichage de l'élément d'interface affichent sur l'écran de visualisation une indication illustrant ce premier couple de distance et de vitesse.

Dans ce cas, de préférence, si ladite première distance dépasse ladite sortie sélectionnée, ledit système engendre une indication illustrant ce dépassement. Par exemple, lesdits moyens d'affichage de l'élément d'interface peuvent afficher sur l'écran de visualisation une telle indication. De plus, avantageusement, si ledit dépassement dure plus longtemps qu'une durée prédéterminée, ladite unité de calcul sélectionne une autre sortie, en aval de ladite sortie sélectionnée initialement.

En outre, avantageusement, lors du roulage sur la piste d'atterrissage, l'unité de calcul détermine un second couple de distance et de vitesse comprenant une vitesse nulle et une seconde distance correspondant à la distance dudit seuil de piste à ladite vitesse nulle, et lesdits moyens d'affichage de l'élément d'interface affichent sur l'écran de visualisation une indication illustrant ce second couple de distance et de vitesse.

Dans ce cas, de préférence, si ladite seconde distance dépasse l'extrémité de la piste d'atterrissage, lesdits moyens d'affichage de l'élément d'interface affichent sur l'écran de visualisation une indication illustrant ce dépassement et ladite unité de calcul détermine un nouvel ordre de décélération destiné à empêcher ce dépassement et l'envoie à l'unité de freinage pour freiner automatiquement l'aéronef. Avantageusement, ledit nouvel ordre de décélération est tel que l'unité de freinage engendre un freinage d'urgence de l'aéronef.

Par ailleurs, dans un mode de réalisation préféré, ledit élément d'interface est un calculateur de type avionique, dudit aéronef, qui est relié à ladite unité de calcul qui est également de type avionique. Toutefois, d'autres modes de réalisation sont aussi possibles, dans lesquels ledit élément d'interface peut, par exemple, être un ordinateur portable qui est susceptible d'être relié, de façon amovible, à ladite unité de calcul qui est de type avionique.

Les figures du dessin annexé feront bien comprendre comment l'invention peut être réalisée. Sur ces figures, des références identiques désignent des éléments semblables.

La figure 1 est le schéma synoptique d'un système conforme à l'invention.

Les figures 2 à 5 illustrent différentes représentations de la piste d'atterrissage susceptibles d'être présentées à un opérateur, à l'aide de moyens d'affichage d'un système conforme à l'invention.

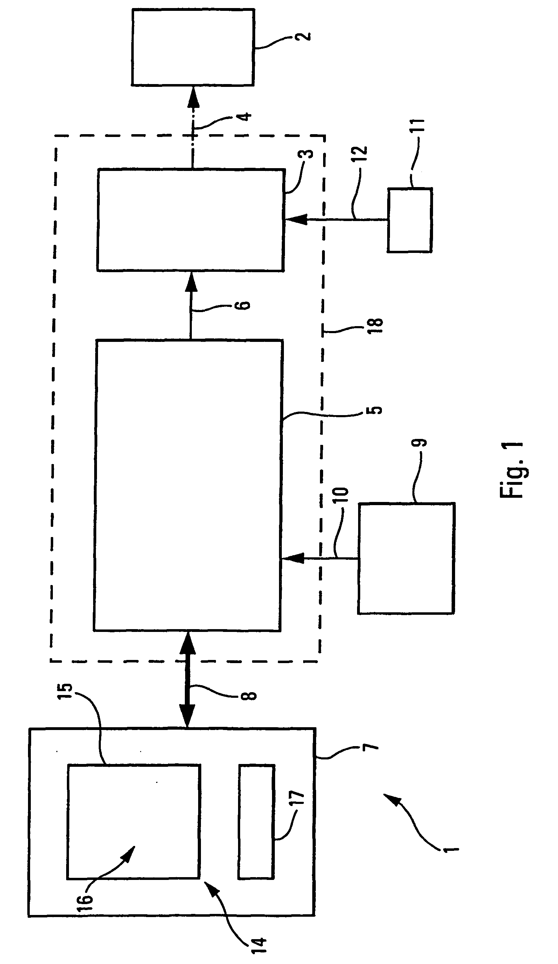

Le système 1 conforme à l'invention et représenté schématiquement sur la figure 1 est destiné à l'aide à la commande de la décélération d'un aéronef A, en particulier d'un avion de transport, roulant sur le sol.

Ledit système 1 est du type comportant :
- des moyens de freinage commandables 2 permettant de freiner l'aéronef A, lorsqu'il roule sur le sol. On entend par moyens de freinage 2 de l'aéronef A, tout équipement connu destiné à décélérer l'aéronef A lors d'un roulage sur le sol. Ces moyens de freinage 2 peuvent comporter des freins à disques agissant sur les roues du train d'atterrissage ou éventuellement des dispositifs dits d'inversion de poussée des propulseurs. Les moyens de freinage 2 peuvent également comporter d'autres dispositifs de freinage aérodynamique tels que des aérofreins ou un parachute de queue ;
- une unité de freinage 3 qui commande automatiquement lesdits moyens de freinage 2, en fonction d'ordres de décélération reçus, comme illustré par une liaison 4 en traits mixtes sur la figure 1 ;
- une unité de calcul 5 qui est reliée par une liaison 6 à ladite unité de freinage 3, pour calculer des ordres de décélération ; et
- un élément d'interface 7 qui est à la disposition d'un opérateur et qui est relié à ladite unité de calcul 5 par des moyens de liaison 8.

Ledit système 1 comporte de plus :
- des sources d'informations 9, en particulier des capteurs et des calculateurs de l'aéronef A, qui fournissent des informations sur l'état dudit aéronef A et sur l'état d'équipements de ce dernier, ainsi que sur l'environnement, à l'unité de calcul 5 par l'intermédiaire d'une liaison 10 ; et
- un moyen d'actionnement 11, par exemple un bouton rotatif, qui est relié par une liaison 12 à l'unité de freinage 3 et qui permet à un opérateur de l'allumer et de l'éteindre, et éventuellement de sélectionner un niveau de décélération (ou de freinage) particulier.

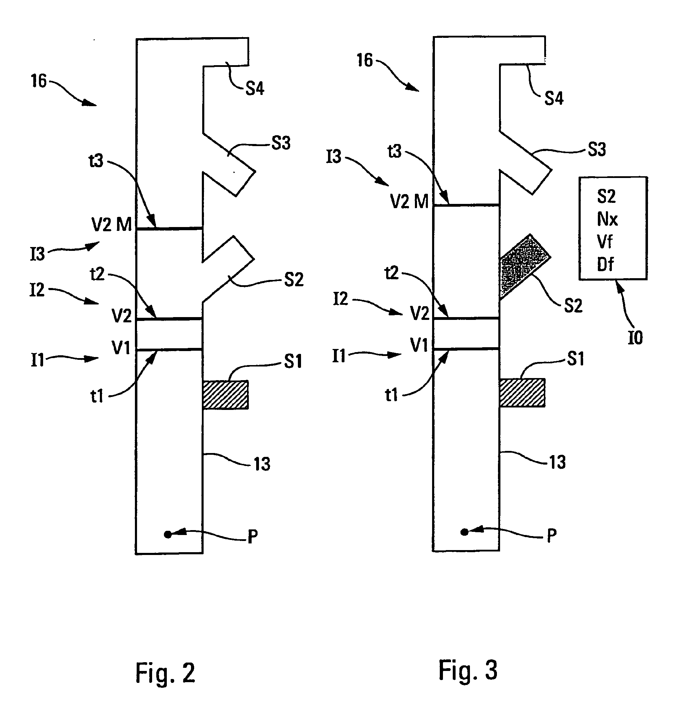

Selon l'invention :
- ladite unité de calcul 5 détermine une pluralité de couples de distance et de vitesse C1, C2, C3 relatifs au roulage de l'aéronef A sur une piste d'atterrissage 13 qui est utilisée pour l'atterrissage dudit aéronef A et qui comprend plusieurs sorties S1, S2, S3, S4. Chacun desdits couples de distance et de vitesse C1, C2, C3 indique la vitesse de roulage de l'aéronef A à la distance associée qui est définie par rapport au seuil de piste de la piste d'atterrissage 13, en tenant compte du point d'impact P (correspondant au centre de la zone d'impact théorique de l'aéronef A sur ladite piste d'atterrissage 13 lors de l'atterrissage) ; et
- ledit élément d'interface 7 comporte :
   - des moyens d'affichage 14 destiné à afficher sur un écran de visualisation 15 une représentation 16 (présentée sur la figure 2 par exemple) de ladite piste d'atterrissage 13, montrant de plus lesdites sorties S1 à S4, ainsi que des indications (ou indicateurs) I1, I2, I3 illustrant lesdits couples de distance et de vitesse C1, C2, C3. Cette représentation 16 permet notamment d'aider un opérateur à choisir, parmi lesdites sorties S1 à S4, celle que devra emprunter l'aéronef A pour quitter la piste d'atterrissage 13 ; et
   - des moyens de sélection 17 permettant à un opérateur de sélectionner la sortie choisie.

Dans un mode de réalisation préféré, ledit élément d'interface 7 est un calculateur de type avionique, dudit aéronef A, qui est relié par des moyens de liaison usuels 8 à ladite unité de calcul 5 qui fait partie avec l'unité de freinage 3 d'un ensemble 18 de type avionique. Toutefois, d'autres modes de réalisation sont aussi possibles, dans lesquels ledit élément d'interface 7 peut, par exemple, être un ordinateur portable qui est de type "monde ouvert" et qui est susceptible d'être relié, de façon amovible, à ladite unité de calcul 5 de type avionique. Lesdits moyens de sélection 17 peuvent être des touches de clavier, un dispositif de désignation de type souris d'ordinateur ou un écran tactile.

Ainsi, le système 1 conforme à l'invention permet d'aider un opérateur, en particulier un pilote de l'aéronef, à sélectionner la sortie la plus appropriée, notamment celle qui est la plus adaptée aux caractéristiques de la piste 13 et de l'aéronef A, ce qui permet d'augmenter la précision de la sélection et de plus de réduire la charge de travail dudit opérateur, puisque les informations affichées par ledit système 1 sont directement disponibles pour ledit opérateur.

Selon l'invention, ladite unité de calcul 5 détermine une vitesse finale Vf correspondant à la vitesse de l'aéronef A à la sortie qui a été sélectionnée par l'opérateur, par exemple la sortie S2, et une distance finale Df correspondant à la distance entre ladite sortie sélectionnée et ledit seuil de piste de la piste d'atterrissage 13, et :
- pendant la phase d'approche avant l'atterrissage, lesdits moyens d'affichage 14 dudit élément d'interface 7 affichent sur ledit écran de visualisation 15 une indication I0 indiquant ladite vitesse finale Vf et ladite distance finale Df, comme représenté sur la figure 3 ; et
- après l'atterrissage lors du roulage sur la piste d'atterrissage 13, ladite unité de calcul 5 utilise ladite vitesse finale Vf et ladite distance finale Df pour calculer lesdits ordres de décélération en vue d'un freinage automatique de l'aéronef A.

Ainsi, le système 1 conforme à l'invention comprend :
- non seulement une fonction de freinage automatique, après l'atterrissage ;
- mais également une fonction d'information du pilote, avant (et après) l'atterrissage, permettant notamment de bien préparer ledit atterrissage.

Dans un mode de réalisation préféré, ladite unité de calcul 5 détermine au moins les couples de distance et de vitesse suivants :
- un couple C1 (représenté par une indication I1 sur les figures 2 et 3) comprenant une vitesse de roulage V1 correspondant à une première vitesse prédéterminée, par exemple 50 noeuds (environ 92 km/h), et une distance D1 correspondant à la distance minimale par rapport au seuil de piste lorsque l'aéronef A roule à ladite vitesse V1 (à cette distance D1);
- un couple C2 (indication I2) comprenant une vitesse de roulage V2 correspondant à une seconde vitesse prédéterminée, par exemple 10 noeuds (environ 18 km/h), inférieure à la vitesse de roulage V1, et une distance D2 correspondant à la distance minimale du seuil de piste lorsque l'aéronef A roule à ladite vitesse V2 et que la piste 13 est sèche ; et
- un couple C3 (indication I3) comprenant ladite vitesse de roulage V2, et une distance D3 correspondant à la distance minimale du seuil de piste lorsque l'aéronef A roule à ladite vitesse V2 et que la piste 13 est mouillée.

Comme on peut le voir sur les figures 2 et 3, chacune desdites indications I1, I2, I3 comprend la vitesse de roulage V1, V2, V2 correspondante, ainsi qu'un trait t1, t2, t3 indiquant sur la piste 13 la distance associée D1, D2, D3 par rapport au seuil de piste. L'indication I3 comprend de plus un signe (lettre "M" par exemple) pour indiquer qu'elle est définie pour une piste 1 3 mouillée.

Par ailleurs, pour aider le pilote à choisir la sortie et pour faciliter la compréhension de la situation effective (sur la piste d'atterrissage 13) avant et surtout après l'atterrissage, lesdits moyens d'affichage 14 mettent en évidence sur ladite représentation 16 de la piste d'atterrissage 13 toutes les sorties (par exemple S1) qui se trouvent à une distance dudit seuil de piste, qui est inférieure à la distance (par exemple D1) d'un couple de distance et de vitesse (par exemple C1) ayant comme vitesse une vitesse de roulage maximale (par exemple V1) prédéterminée de l'aéronef A, par exemple la vitesse de roulage maximale pour emprunter la sortie.

Dans l'exemple représenté sur les figures 1 et 2, la vitesse de roulage maximale correspond à la vitesse V1 (bien qu'une autre vitesse soit également envisageable) de sorte que seule la sortie S1 est mise en évidence. Cette mise en évidence est illustrée par des hachures sur les figures 2 à 5. Cette sortie S1 ne peut donc pas être empruntée par l'aéronef A, ce dernier ne pouvant pas être suffisamment freiné de sorte que sa vitesse est trop élevée au niveau de ladite sortie S1.

Dans un mode de réalisation particulier, pendant la phase d'approche, ladite unité de calcul 5 détermine un niveau de décélération Nx, parmi une pluralité de niveaux de décélération possibles, qui est affiché sur ledit écran de visualisation 15, par exemple au niveau de l'indication I0 qui indique également la distance Df, la vitesse Vf, ainsi que la sortie (S2 par exemple) qui a été sélectionnée par l'opérateur, comme représenté sur la figure 3. La sortie S2 ou S4 sélectionnée peut être mise en évidence par un changement de couleur (illustré par un noircissement sur les figures 3 à 5).

Par conséquent, grâce à l'invention, pendant la phase d'approche de l'aéronef A de la piste d'atterrissage 13, les étapes successives suivantes peuvent, par exemple, être mises en oeuvre :
- un pilote de l'aéronef A sélectionne sur l'élément d'interface 7 une page particulière qui est prévue pour la communication avec l'unité de calcul 5;
- l'unité de calcul 5 détermine à l'aide d'informations (telles que la piste 13 de l'aéroport qui a été sélectionnée pour l'atterrissage, la vitesse d'approche de l'aéronef A et le point d'impact théorique sur ladite piste 13) issues desdites sources d'informations 9 notamment, lesdites distances D1, D2, D3 précitées de manière à former les couples C1, C2, C3 et transmet les données relatives à ces couples C1, C2, C3 à l'élément d'interface 7. Ces calculs peuvent également être réalisés directement par l'élément d'interface 7 qui reçoit, dans ce cas, les informations précitées de ladite unité de calcul 5 ;
- l'élément d'interface 7 affiche les indications I1, I2, I3 relatives à ces couples C1, C2, C3 sur la représentation 16 (figure 2) ;
- le pilote choisit une sortie S2 et la sélectionne à l'aide des moyens de sélection 17 ;
- les informations correspondantes sont transmises à l'unité de calcul 5 qui calcule les ordres de décélération appropriés, en déterminant notamment la distance finale Df (c'est-à-dire la distance entre le seuil de piste et la sortie S2 sélectionnée) et la vitesse finale Vf ;
- l'unité de calcul 5 transmet des informations (distance finale Df, vitesse finale Vf, niveau de décélération Nx) à l'élément d'interface 7 qui les affiche (indication I0 sur la figure 3).

Le système 1 conforme à l'invention permet donc une véritable coopération, avec une communication dans les deux sens, entre un opérateur utilisant l'élément d'interface 7 et l'ensemble 18 de type avionique. Cette coopération a une fonction d'information et de préparation de l'atterrissage, pendant la phase d'approche.

Ledit système 1 permet, après l'atterrissage, de poursuivre cette coopération et de plus de réaliser un freinage automatique optimal de l'aéronef A.

Dans un mode de réalisation particulier, ladite unité de calcul 5 détermine un ordre de décélération et l'envoie à l'unité de freinage 3 pour freiner automatiquement l'aéronef A, à un instant correspondant au premier des deux instants suivants :
- l'instant où l'aéronef A se trouve complètement au sol à l'atterrissage, c'est-à-dire à l'instant où le train d'atterrissage avant de l'aéronef A touche la piste d'atterrissage 13 de sorte que l'aéronef A présente alors trois points de contact avec le sol ; et
- l'instant de fin d'un délai de temporisation prédéterminé, par exemple de deux secondes, qui s'est écoulé depuis un premier contact de l'aéronef A, par l'intermédiaire du train d'atterrissage principal par exemple, avec la piste d'atterrissage 13.

Cet ordre de décélération est calculé à partir des position, vitesse et accélération actuelles de l'aéronef A, détectées par des moyens usuels faisant partie des sources d'informations 9, et desdites position et vitesse finales déterminées précédemment.

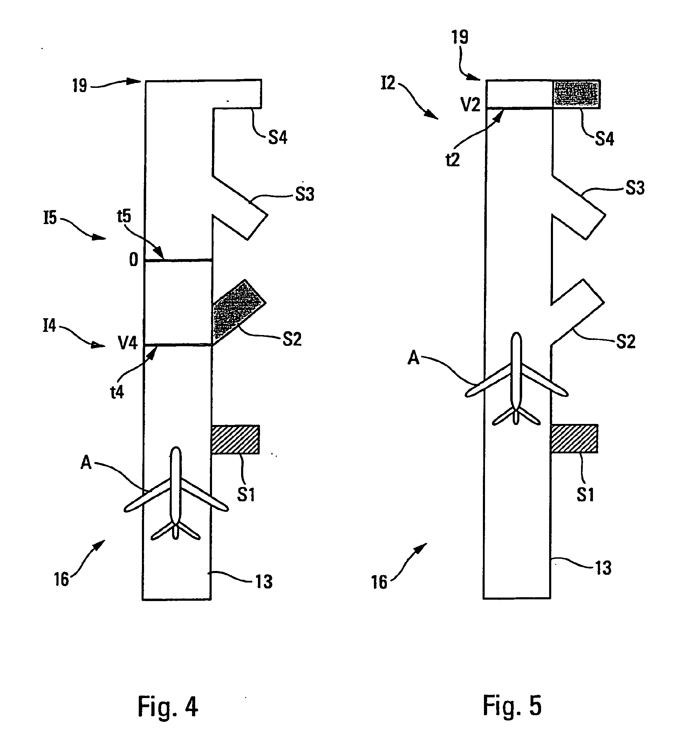

De plus, dans ce cas, lors du roulage sur la piste d'atterrissage 13, l'unité de calcul 5 détermine en permanence un couple de distance et de vitesse C4 comprenant comme vitesse V4 ladite vitesse finale Vf et une distance D4 correspondant à la distance dudit seuil de piste à ladite vitesse finale Vf, et lesdits moyens d'affichage 14 de l'élément d'interface 7 affichent sur l'écran de visualisation 15 une indication 14 (V4 et t4) illustrant ce couple de distance et de vitesse C4, comme représenté sur la figure 4.

Sur les figures 4 et 5, on a également représenté un symbole A illustrant la position actuelle effective de l'aéronef sur la piste d'atterrissage 13, pendant la phase de roulage.

Si ladite distance D4 dépasse ladite sortie S2 sélectionnée, lesdits moyens d'affichage 14 de l'élément d'interface 7 affichent sur l'écran de visualisation 15 une indication I4A illustrant ce dépassement. A titre d'exemple, cette indication I4A peut correspondre à un changement de couleur de l'indication I4, ou au moins du trait t4 de cet indication I4, qui d'une couleur noire passe à une couleur ambre par exemple.

Si ledit dépassement dure plus longtemps qu'une durée prédéterminée, l'unité de calcul 5 sélectionne une autre sortie S4, en aval de ladite sortie S2 sélectionnée initialement, dans le sens de roulage de l'aéronef A, comme représenté sur la figure 5.

En outre, lors du roulage de l'aéronef A sur la piste d'atterrissage 13, l'unité de calcul 5 détermine de plus un couple de distance et de vitesse C5 comprenant une vitesse nulle "0" et une distance D5 correspondant à la distance dudit seuil de piste à ladite vitesse nulle, et lesdits moyens d'affichage 14 affichent sur l'écran de visualisation 15 une indication I5 ("O" et t5) illustrant ce couple de distance et de vitesse C5, comme représenté sur la figure 4.

Si ladite distance D5 dépasse l'extrémité 19 de la piste d'atterrissage 13, lesdits moyens d'affichage 14 affichent sur l'écran de visualisation 15 une indication illustrant ce dépassement. De plus, ladite unité de calcul 5 détermine un nouvel ordre de décélération destiné à empêcher ce dépassement, et l'envoie à l'unité de freinage 3 pour freiner automatiquement l'aéronef A de manière à le garder sur la piste d'atterrissage 13. De préférence, ledit nouvel ordre de décélération est tel que l'unité de freinage 3 engendre un freinage d'urgence de l'aéronef A.

A titre d'exemple, on a représenté sur la figure 5, l'indication I2 correspondant au couple C2, c'est-à-dire avec comme vitesse sélectionnée la vitesse V2 qui est inférieure à la vitesse V4 ou la vitesse V1. Dans ce cas, l'indication I2A illustrant un dépassement de l'extrémité 19 de la piste 13, peut correspondre à un changement de couleur de cette indication I2, ou au moins du trait t2 de cette indication I2, qui d'une couleur noire passe à une couleur rouge par exemple. Ledit dépassement peut également être signalé par une indication sonore ou vocale, laquelle peut aussi être prévue en complément dudit changement de couleur.

## Revendications

1. Système d'aide à la commande de la décélération d'un aéronef (A), en particulier d'un avion de transport, roulant sur le sol, ledit système (1) comportant :
- des moyens de freinage commandables (2) permettant de freiner l'aéronef (A), lorsqu'il roule sur le sol;
- une unité de freinage (3) qui commande automatiquement lesdits moyens de freinage (2), en fonction d'ordres de décélération reçus;
- une unité de calcul (5) pour calculer des ordres de décélération ; et
- un élément d'interface (7) qui est à la disposition d'un opérateur et qui est relié à ladite unité de calcul (5),
**caractérisé en ce que** :
- ladite unité de calcul (5) détermine une pluralité de couples de distance et de vitesse relatifs au roulage de l'aéronef (A) sur une piste d'atterrissage (13) utilisée pour l'atterrissage dudit aéronef (A) et comprenant plusieurs sorties (S1, S2, S3, S4), chacun desdits couples de distance et de vitesse indiquant la vitesse de roulage de l'aéronef (A) à la distance associée qui est définie par rapport au seuil de piste, en tenant compte du point d'impact (P) de l'aéronef (A) sur ladite piste d'atterrissage (13) lors de l'atterrissage ;
- ledit élément d'interface (7) comporte :
. des moyens d'affichage (14) permettant d'afficher sur un écran de visualisation (15) une représentation (16) de ladite piste d'atterrissage (13) montrant lesdites sorties (S1 à S4), ainsi que des indications (I1, I2, I3, I4, I5) illustrant lesdits couples de distance et de vitesse, permettant d'aider un opérateur à choisir l'une desdites sorties (S 1 à S4) ; et
. des moyens de sélection (17) permettant à un opérateur de sélectionner la sortie choisie ;
- ladite unité de calcul (5) détermine une vitesse finale (Vf) correspondant à la vitesse de l'aéronef (A) à la sortie (S2) qui a été sélectionnée par un opérateur et une distance finale (Df) correspondant à la distance entre ladite sortie sélectionnée (S2) et ledit seuil de piste de la piste d'atterrissage (13);
- pendant la phase d'approche avant l'atterrissage, lesdits moyens d'affichage (14) dudit élément d'interface (7) affichent sur ledit écran de visualisation (15) des indications (10) illustrant ladite vitesse finale (Vf) et ladite distance finale (Df) ; et
- après l'atterrissage lors du roulage sur la piste d'atterrissage (13), ladite unité de calcul (5) utilise ladite vitesse finale (Vf) et ladite distance finale (Df) pour calculer lesdits ordres de décélération.

2. Système selon la revendication 1,
**caractérisé en ce que** ladite unité de calcul (5) détermine au moins les couples de distance et de vitesse suivants :
- une vitesse de roulage (V1) correspondant à une première vitesse prédéterminée, et la distance minimale du seuil de piste lorsque l'aéronef (A) roule à cette première vitesse prédéterminée ;
- une vitesse de roulage (V2) correspondant à une seconde vitesse prédéterminée, et la distance minimale du seuil de piste lorsque l'aéronef (A) roule à cette seconde vitesse prédéterminée, dans le cas où la piste d'atterrissage (13) est sèche ; et
- une vitesse de roulage (V2) correspondant à ladite seconde vitesse prédéterminée, et la distance minimale du seuil de piste lorsque l'aéronef (A) roule à cette seconde vitesse prédéterminée, dans le cas où la piste d'atterrissage (13) est mouillée.

3. Système selon l'une des revendications 1 et 2,
**caractérisé en ce que** lesdits moyens d'affichage (14) dudit élément d'interface (7) mettent en évidence sur ladite représentation (16) de la piste d'atterrissage (13) toutes les sorties (S1) qui se trouvent à une distance dudit seuil de piste, qui est inférieure à la distance d'un couple de distance et de vitesse ayant comme vitesse une vitesse de roulage maximale prédéterminée (V1) de l'aéronef (A).

4. Système selon l'une quelconque des revendications précédentes,
**caractérisé en ce que**, pendant la phase d'approche, ladite unité de calcul (5) détermine un niveau de décélération (Nx) qui est affiché sur ledit écran de visualisation (15) dudit élément d'interface (7).

5. Système selon l'une quelconque des revendications précédentes,
**caractérisé en ce que** ladite unité de calcul (5) détermine un ordre de décélération et l'envoie à l'unité de freinage (8) pour freiner automatiquement l'aéronef (A), à un instant correspondant au premier des deux instants suivants :
- l'instant où l'aéronef (A) se trouve complètement sur la piste d'atterrissage (13), à l'atterrissage ; et
- l'instant de fin d'un délai de temporisation prédéterminé qui s'est écoulé depuis un premier contact de l'aéronef (A) avec la piste d'atterrissage (13).

6. Système selon l'une quelconque des revendications précédentes,
**caractérisé en ce que**, lors du roulage sur la piste d'atterrissage (13), l'unité de calcul (5) détermine un premier couple de distance et de vitesse comprenant ladite vitesse finale et une première distance correspondant à la distance dudit seuil de piste à ladite vitesse finale, et lesdits moyens d'affichage (14) de l'élément d'interface (7) affichent sur l'écran de visualisation (15) une indication (I4) illustrant ce premier couple de distance et de vitesse.

7. Système selon la revendication 6,
**caractérisé en ce que**, si ladite première distance dépasse ladite sortie sélectionnée, ledit système (1) engendre une indication illustrant ce dépassement.

8. Système selon la revendication 7,
**caractérisé en ce que**, si ledit dépassement dure plus longtemps qu'une durée prédéterminée, ladite unité de calcul (5) sélectionne une autre sortie, en aval de ladite sortie sélectionnée initialement.

9. Système selon l'une quelconque des revendications 6 à 8,
**caractérisé en ce que**, lors du roulage sur la piste d'atterrissage (13), l'unité de calcul (5) détermine un second couple de distance et de vitesse comprenant une vitesse nulle (0) et une seconde distance correspondant à la distance dudit seuil de piste à ladite vitesse nulle (0), et lesdits moyens d'affichage (14) de l'élément d'interface (7) affichent sur l'écran de visualisation (15) une indication (I5) illustrant ce second couple de distance et de vitesse.

10. Système selon la revendication 9,
**caractérisé en ce que**, si ladite seconde distance dépasse l'extrémité (19) de la piste d'atterrissage (13), lesdits moyens d'affichage (14) de l'élément d'interface (7) affichent sur l'écran de visualisation (15) une indication illustrant ce dépassement et ladite unité de calcul (5) détermine un nouvel ordre de décélération destiné à empêcher ce dépassement et l'envoie à l'unité de freinage (3) pour freiner automatiquement l'aéronef (A).

11. Système selon la revendication 10,
**caractérisé en ce que** ledit nouvel ordre de décélération est tel que l'unité de freinage (3) engendre un freinage d'urgence de l'aéronef (A).

12. Système selon l'une quelconque des revendications précédentes,
**caractérisé en ce que** ledit élément d'interface (7) est un calculateur de type avionique, dudit aéronef (A), qui est reliée à ladite unité de calcul (5) qui est également de type avionique.

13. Aéronef,
**caractérisé en ce qu'**il comporte un système (1) tel que celui spécifié sous l'une quelconque des revendications 1 à 12.

## Claims

1. A system for aiding control of the deceleration of an aircraft (A), in particular a transport aircraft, moving over the ground, said system (1) including:
- controllable braking means (2) for braking the aircraft (A) when it is moving over the ground;
- a braking unit (3) that automatically controls said braking means (2) on the basis of received deceleration orders;
- a computing unit (5) for computing deceleration orders; and
- an interface element (7) at the disposal of an operator and connected to said computing unit (5),
**characterized in that**:
- said computing unit (5) determines a plurality of distance/speed pairs relating to the travel of the aircraft (A) over a landing runway (13) used for the landing of said aircraft (A) and comprising a plurality of exits (S1, S2, S3, S4), each of said distance/speed pairs indicating the speed of movement of the aircraft (A) at the associated distance, which is defined relative to the runway threshold, taking into account the point (P) of impact of the aircraft (A) on said landing runway (13) at the time of landing;
- said interface element (7) includes:
. display means (14) for displaying, on a display screen (15), a representation (16) of said landing runway (13), showing said exits (S1 to S4), and indications (I1, 12, I3, I4, I5) illustrating said distance/speed pairs, aiding an operator in choosing one of said exits (S1 to S4); and
. selection means (17) enabling an operator to select the chosen exit;
- said computing unit (5) determines a final speed (Vf) corresponding to the speed of the aircraft (A) at the exit (S2) selected by an operator and a final distance (Df) corresponding to the distance between said selected exit (S2) and said runway threshold of the landing runway (13);
- during the approach phase before landing, said display means (14) of said interface element (7) display on said display screen (15) indications (10) illustrating said final speed (Vf) and said final distance (Df); and
- after landing, during movement over the landing runway (13), said computing unit (5) uses said final speed (Vf) and said final distance (Df) to calculate said deceleration orders.

2. The system as claimed in claim 1,
**characterized in that** said computing unit (5) determines at least the following distance/speed pairs:
- a speed of movement (V1) corresponding to a first predetermined speed and the minimum distance of the runway threshold when the aircraft (A) is moving at this first predetermined speed;
- a speed of movement (V2) corresponding to a second predetermined speed and the minimum distance from the runway threshold when the aircraft (A) is moving at this second predetermined speed, if the landing runway (13) is dry; and
- a speed of movement (V2) corresponding to said second predetermined speed and the minimum distance from the runway threshold when the aircraft (A) is moving at this second predetermined speed, if the landing runway (13) is wet.

3. The system as claimed in one of claims 1 and 2,
**characterized in that** said display means (14) of the interface element (7) show on said representation (16) of the landing runway (13) all the exits (S1) located at a distance from said runway threshold that is shorter than the distance of a distance/speed pair having, as speed, a predetermined maximum speed of movement (V1) of the aircraft (A).

4. The system as claimed in any one of the preceding claims,
**characterized in that**, during the approach phase, said computing unit (5) determines a deceleration level (Nx) that is displayed on said display screen (15) of said interface element (7).

5. The system as claimed in any one of the preceding claims,
**characterized in that** said computing unit (5) determines a deceleration order and sends it to the braking unit (8) in order automatically to brake the aircraft (A) at an instant corresponding to the first of the following two instants:
- the instant at which the aircraft (A) is completely on the landing runway (13), upon landing; and
- the instant of the end of a predetermined timing delay that has elapsed since a first contact of the aircraft (A) with the landing runway (13).

6. The system as claimed in any one of the preceding claims,
**characterized in that**, during movement over the landing runway (13), the computing unit (5) determines a first distance/speed pair comprising said final speed and a first distance corresponding to the distance from said runway threshold at said final speed, and said display means (14) of the interface element (7) display on the display screen (15) an indication (I4) illustrating this first distance/speed pair.

7. The system as claimed in claim 6,
**characterized in that**, if said first distance extends beyond said selected exit, said system (1) generates an indication illustrating this extension.

8. The system as claimed in claim 7,
**characterized in that**, if said extension lasts longer than a predetermined period, said computing unit (5) selects another exit downstream of said exit selected initially.

9. The system as claimed in any one of claims 6 to 8,
**characterized in that**, during movement over the landing runway (13), the computing unit (5) determines a second distance/speed pair comprising a zero speed (0) and a second distance corresponding to the distance from said runway threshold at said zero speed (0), and said display means (14) of the interface element (7) display on the display screen (15) an indication (15) illustrating this second distance/speed pair.

10. The system as claimed in claim 9,
**characterized in that**, if said second distance extends beyond the end (19) of the landing runway (13), said display means (14) of the interface element (7) display on the display screen (15) an indication illustrating this extension, and said computing unit (5) determines a new deceleration order for preventing this extension and sends it to the braking unit (3) in order automatically to brake the aircraft (A).

11. The system as claimed in claim 10,
**characterized in that** said new deceleration order is such that the braking unit (3) generates an emergency braking of the aircraft (A).

12. The system as claimed in any one of the preceding claims,
**characterized in that** said interface element (7) is an avionics-type computer of said aircraft (A) that is connected to said computing unit (5), which is also of avionics type.

13. An aircraft,
**characterized in that** it includes a system (1) such as that specified in any one of claims 1 to 12.

## Patentansprüche

1. Hilfssystem zur Verzögerungssteuerung eines Flugzeugs (A), insbesondere eines Transportflugzeugs, im Rollvorgang, wobei das System (1) umfasst:
- ansteuerbare Bremsmittel (2) zum Abbremsen des Flugzeugs (A), wenn es am Boden rollt;
- eine Bremseinheit (3), welche die Bremsmittel (2) in Abhängigkeit von empfangenen Verzögerungsbefehlen automatisch steuert;
- ein Recheneinheit (5) zum Berechnen der Verzögerungsbefehle und
- ein Schnittstellenelement (7), das einer Bedienperson zur Verfügung steht und das mit der Recheneinheit (5) verbunden ist,
**dadurch gekennzeichnet, dass**:
- die Recheneinheit (5) eine Vielzahl von Distanz/Geschwindigkeits-Paaren bezüglich des Rollvorgangs des Flugzeugs (A) auf einer zur Landung des Flugzeugs (A) genutzten Landebahn (13) mit mehreren Ausgängen (S1, S2, S3, S4) bestimmt, wobei jedes Distanz/Geschwindigkeits-Paar die Rollgeschwindigkeit des Flugzeugs (A) bei der zugehörigen Distanz anzeigt, die relativ zur Landebahnschwelle definiert ist unter Berücksichtigung des Aufsetzpunktes (P) des Flugzeugs (A) auf der Landebahn (13) zum Zeitpunkt der Landung;
- das Schnittstellenelement (7) umfasst:
■ Anzeigemittel (14) um auf einem Anzeigebildschirm (15) eine Darstellung (16) der Landebahn (13) anzuzeigen, welche die Ausgänge (S1 bis S4), sowie Angaben (11, I2, 13, 14, 15) zeigt, die die Distanz/Geschwindigkeits-Paare darstellen, um eine Bedienperson bei der Auswahl eines der Ausgänge (S1 bis S4) zu unterstützen und
■ Auswahlmittel (17), die es einer Bedienperson ermöglichen, den gewählten Ausgang auszuwählen;
- die Recheneinheit (5) eine Endgeschwindigkeit (Vf) bestimmt, die der Geschwindigkeit des Flugzeugs (A) bei dem Ausgang (S2) entspricht, der von einer Bedienperson gewählt wurde und eine Enddistanz (Df), die der Distanz zwischen dem gewählten Ausgang (S2) und der Landebahnschwelle der Landebahn (13) entspricht;
- während der Anflugphase vor der Landung, die Anzeigemittel (14) des Schnittstellenelements (7) auf dem Anzeigebildschirm (15) Angaben (10) anzeigen, welche die Endgeschwindigkeit (Vf) und die Enddistanz (Df) darstellen und
- nach der Landung, während des Rollvorgangs auf der Landebahn (13), die Recheneinheit (5) die Endgeschwindigkeit (Vf) und die Enddistanz (Df) verwendet, um die Verzögerungsbefehle zu berechnen.

2. System nach Anspruch 1,
**dadurch gekennzeichnet, dass** die Recheneinheit (5) mindestens die folgenden Distanz/Geschwindigkeits-Paare bestimmt:
- eine Rollgeschwindigkeit (V1), die einer ersten vorgegebenen Geschwindigkeit und der Mindestdistanz der Landebahnschwelle entspricht, wenn das Flugzeug (A) diese erste vorgegebene Geschwindigkeit aufweist;
- eine Rollgeschwindigkeit (V2), die einer zweiten vorgegebenen Geschwindigkeit und der Mindestdistanz der Landebahnschwelle entspricht, wenn das Flugzeug (A) diese zweite vorgegebene Geschwindigkeit aufweist, in dem Fall, dass die Landebahn (13) trocken ist und
- eine Rollgeschwindigkeit (V2), die der zweiten vorgegebenen Geschwindigkeit und der Mindestdistanz der Landebahnschwelle entspricht, wenn das Flugzeug (A) diese zweite vorgegebene Geschwindigkeit aufweist, in dem Fall, dass die Landebahn (13) nass ist.

3. System nach Anspruch 1 oder 2,
**dadurch gekennzeichnet, dass** die Anzeigemittel (14) des Schnittstellenelements (7) in der Darstellung (16) der Landebahn (13) alle Ausgänge (S1) hervorheben, die eine Distanz zur Landebahnschwelle aufweisen, die geringer ist als die Distanz eines Distanz/Geschwindigkeits-Paars, welches als Geschwindigkeit eine vorgegebene maximale Rollgeschwindigkeit (V1) des Flugzeugs (A) aufweist.

4. System nach einem der vorhergehenden Ansprüche,
**dadurch gekennzeichnet, dass** während der Anflugphase die Recheneinheit (5) ein Verzögerungsniveau (Nx) bestimmt, das auf dem Anzeigebildschirm (15) des Schnittstellenelements (7) angezeigt wird.

5. System nach einem der vorhergehenden Ansprüche,
**dadurch gekennzeichnet, dass** die Recheneinheit (5) einen Verzögerungsbefehl bestimmt und zur Bremseinheit (8) überträgt, um das Flugzeug (A) zu einem Zeitpunkt automatisch zu bremsen, der dem ersten der beiden folgenden Zeitpunkte entspricht:
- dem Zeitpunkt, zu dem das Flugzeug (A) sich bei der Landung vollständig auf der Landebahn (13) befindet und
- dem Zeitpunkt des Endes einer vorgegebenen Verzögerungszeit, die seit einem ersten Kontakt des Flugzeugs (A) mit der Landebahn (13) verstrichen ist.

6. System nach einem der vorhergehenden Ansprüche,
**dadurch gekennzeichnet, dass** die Recheneinheit (5) während des Rollvorgangs auf der Landebahn (13) ein erstes Distanz/Geschwindigkeits-Paar mit der Endgeschwindigkeit und einer ersten Distanz bestimmt, die der Distanz der Landebahnschwelle bei der Endgeschwindigkeit entspricht und die Anzeigemittel (14) des Schnittstellenelements (7) auf dem Anzeigebildschirm (15) eine Angabe (I4) darstellen, die dieses erste Distanz/Geschwindigkeits-Paar anzeigt.

7. System nach Anspruch 6,
**dadurch gekennzeichnet, dass**, wenn die erste Distanz über den gewählten Ausgang hinaus reicht, das System (1) eine Anzeige erzeugt, die dieses Überschreiten darstellt.

8. System nach Anspruch 7,
**dadurch gekennzeichnet, dass**, wenn das Überschreiten länger als eine vorbestimmte Zeitdauer andauert, die Recheneinheit (5) einen anderen Ausgang hinter dem anfänglich gewählten Ausgang wählt.

9. System nach einem der Ansprüche 6 bis 8,
**dadurch gekennzeichnet, dass** die Recheneinheit (5) während des Rollvorgangs auf der Landebahn (13) ein zweites Distanz/Geschwindigkeits-Paar bestimmt mit einer Geschwindigkeit Null (0) und einer zweiten Distanz, die der Distanz der Landebahnschwelle bei der Geschwindigkeit Null (0) entspricht und die Anzeigemittel (14) des Schnittstellenelements (7) auf dem Anzeigebildschirm (15) eine Angabe (15) darstellen, die dieses zweite Distanz/Geschwindigkeits-Paar anzeigt.

10. System nach Anspruch 9,
**dadurch gekennzeichnet, dass**, wenn die zweite Distanz über das Ende (19) der Landebahn (13) hinaus reicht, die Anzeigemittel (14) des Schnittstellenelements (7) auf dem Anzeigebildschirm (15) ein Angabe darstellen, die dieses Überschreiten anzeigt und die Recheneinheit (5) einen neuen Verzögerungsbefehl, der dazu vorgesehen ist, dieses Überschreiten zu verhindern, bestimmt und an die Bremseinheit (3) überträgt, um das Flugzeug (A) automatisch abzubremsen.

11. System nach Anspruch 10,
**dadurch gekennzeichnet, dass** der neue Verzögerungsbefehl so beschaffen ist, dass die Bremseinheit (3) eine Notbremsung des Flugzeugs (A) bewirkt.

12. System nach einem der vorhergehenden Ansprüche,
**dadurch gekennzeichnet, dass** das Schnittstellenelement (7) ein Rechner des Flugzeugs (A) der avionischen Art ist, der mit der Recheneinheit (5) verbunden ist, die ebenfalls avionischer Art ist.

13. Flugzeug,
**dadurch gekennzeichnet, dass** es ein System (1), wie das unter einem der Ansprüche 1 bis 12 spezifizierte, umfasst.
